# EUROPEAN PATENT APPLICATION

(11) **EP 4 184 117 A1**
(43) Date of publication of application: **24.05.2023**
(21) Application number: 21208874.4
(22) Date of filing: 17.11.2021
(51) Int. Cl.: G01C 15/00

(54) **USER CONTROL WITH SMART WEARABLE DEVICES**

(71) Applicant: Leica Geosystems AG, 9435 Heerbrugg (CH)
(72) Inventor: VENNEGEERTS, Harald, 10585 Berlin (DE); FACCHIN, Aldo, 33082 Azzano Decimo (IT)
(74) Representative: Kaminski Harmann

(57) **Abstract**

The invention relates to a surveying system comprising a surveying device 2 being controllable by a first remote controller, the first remote controller is embodied as wristwatch-device 1 adapted to be worn on a wrist of a user or as glove 13 adapted to be worn over the hand of a user, the first remote controller comprising a connection-interface for receiving real-time status and/or actual measurement data of the surveying device 2 and for transmitting control command data for controlling the surveying device 2, the first remote controller further comprising a user-interface for interacting with the user.

## Description

### FIELD OF THE INVENTION

The present invention relates to a surveying system comprising a surveying device and a first remote controller. Such a surveying device is used for acquiring three-dimensional measuring points. Examples of such surveying devices are total stations, theodolites, or laser scanners.

### BACKGROUND OF THE INVENTION

Terrestrial Laser Scanner (TLS) can be operated as 3D scanner in a static scanning mode or as Mobile Mapping Systems (car-based, as a backpack, hand-held, etc.) in a kinematic scanning mode acquiring measuring data while moving the respective platform.

Surveying instruments are more and more operated by non-experts with low or no prior knowledge. This increases the need for an intuitive usage. Higher surveying performance and speed especially of mobile capturing devices increase the need to react and interact according to the present conditions of the surroundings. The control of such surveying instruments highly depends on the current location of the human operator.

Surveying processes are often characterized by actions to enable mobility inside of a surveying environment. In order to access and operate in such an environment, the user often has to move "hands-free". This is for instance necessary in indoor environments, as the user must be able to open doors while surveying.

Today surveying instruments are typically controlled with a dedicated control device. In many cases, such control devices prevent the user from operating "hands-free", because state-of-the-art equipment usually includes a remote-controller which has to be carried by the user. In case of a control device portable as a backpack for mobile mapping, the user has to carry an additional device, so the hands of the user are bound. This makes the operation more difficult as it is not possible to open doors and as it limits the use especially in case of safety restrictions, e.g. walking in dangerous environments like construction sites, hills or factories.

Surveying devices carried by a human, e.g. a hand-held device or a backpack-scanner, can also be operated on driving platforms like bicycles, motorcycles, electrical scooters, ski etc. However, the additional carried controllers limit the use of such mobility platforms significantly. Mobile mapping systems mounted on a car roof are often operated by the person who drives the car simultaneously, restricting the use of such controlling devices due to safety reasons and to avoid distractions.

### OBJECT OF THE INVENTION

It is therefore an object of the invention to provide an improved surveying system, which eliminates the above mentioned problems of the prior art, especially considering the handling of the controlling device and the generation of motion/position-data.

A particular object is to provide a surveying system comprising a surveying device being controllable by a wristwatch-device.

Another object is to provide a surveying system comprising a surveying device being controllable by a smart glove.

These objects are achieved by realizing at least part of the features of the independent claims. Features which further develop the invention in an alternative or advantageous manner are described in the dependent patent claims.

### SUMMARY OF THE INVENTION

The invention solves these problems with smart wearable devices that allow a bidirectional communication without distraction, e.g. of the vehicle guidance. Via smart wearable devices an operator can get feedback, e.g. like vibrations, sounds etc. or can send commands to control the surveying device, e.g. voice control, gestures etc.

In this way, smart wearable devices enable a flexible movement of the user inside of the surveying environment, as there is no longer a need of continuously carrying a tablet/laptop/phone in the hands and looking at them to give instructions to the surveying device. The user can instead focus on the surveying environment. The haptic feedback, e.g. a vibration, is transmitted to the user, so that the user can decide if he wants to pay attention to a display. The user input can be provided by the voice or by the movement of the arms. This accelerates the overall surveying procedure and might be necessary to meet security demands.

A single user can further drive a vehicle and control the mobile mapping system while having continuous feedback about the system and the quality of the data capture.

In case of customized devices, high efforts and costs are required for their development and manufacturing. As a possible modification of the surveying devices, an anti-theft module can be installed. Static devices like terrestrial 3D imaging/scanning systems can be operated remotely as well, and the user can have immediate feedback about thefts or theft attempts.

It is further possible to track human operators and therefore optimize the surveying process or the procedure of a fleet of surveying devices working on a common surveying project (fleet management). The smart wearable devices can be used to update about the surveying status of the whole project.

In case a user is not wearing correction glasses, corresponding to safety glasses with a correction of the eyesight, the readability of displays can significantly be reduced. In order to solve this problem, a bidirectional control/feedback channel (haptic, voice, gesture) can be introduced to replace a visible display-driven communication channel.

The invention relates to a surveying system comprising a surveying device and a first remote controller, the first remote controller is embodied as wristwatch-device adapted to be worn on a wrist of a user. The wristwatch-device comprises a connection-interface for receiving real-time status and/or actual measurement data of the surveying device and for transmitting control command data for controlling the surveying device. The wristwatch-device further comprises a user-interface for interacting with the user.

The wristwatch-device can be embodied as a smartwatch, which is an intuitive, well-known device with a high level of acceptance, and thus simplifies the introduction to a user without pre-knowledge. Such a wristwatch-device further reduces the efforts for hardware development and system costs.

In some embodiments, the wristwatch-device further comprises a sensor unit for generating data regarding actual motion, position and/or pose as motion/position-data that depends on actual motion, pose and/or position of the wristwatch-device-wearing wrist of the user and at least one microphone and at least one loudspeaker configured to receive and give acoustic instructions by means of voice control.

In a further embodiment, the wristwatch-device comprises a processing circuitry configured to process the motion/position-data in a way to interpret the motion/position-data as a probable user behavior, and to generate the control command data based on the probable user behavior resulting from the interpretation.

In a further embodiment, a distance of a user to the surveying device is continuously gathered over time as motion/position-data and, in processing the distance, a consecutively increasing distance over time reaching a defined threshold distance is interpreted as intention of a user to pause or stop measurement task, and, as control command data, a command to temporarily block usage of the surveying device is generated functioning as anti-theft protection.

The usage of the system can be blocked if the surveying instrument distances from the user in an unplanned manner. This anti-theft functionality can be realized by such a wristwatch-device without using additional hardware devices.

In a further embodiment, a pose and path of the wristwatch-device-wearing wrist of the user is continuously gathered over time as motion/position-data, and, in processing the position and pose, a pose and path indicative of a fall of the user is interpreted as fall, and, as control command data, a control command to stop measurement of the surveying device and/or to initiate a security backup of the actual measurement data of the surveying device.

The control of surveying instruments highly depends on the current location of the user. A location-based control simplifies and automatizes the data acquisition process. In this manner the data acquisition of a mobile mapping system pauses in case the driver moves away from the vehicle. The position sensor of the smartwatch also enables such an automatic location-based control of the surveying device, for example a start/stop of the data acquisition when the driver approaches a mobile mapping car or an automatic selection of reference points.

In a further embodiment, the user-interface comprises a touchscreen display having a maximum of 2500 sq mm display area and in particular a command-button, loudspeaker, microphone, and/or vibrate mode.

The display of the smartwatch can be used for basic functionality to control (start, stop, pause, etc.) and also to get feedback from the surveying devices. Via the microphone of the smartwatch the surveying instrument can be controlled without touching an additional device.

Visible distractions can be reduced or avoided with a haptic or an audio feedback emitted by the smartwatch and thus the system can be introduced for more application cases with safety restrictions. During the operation the user can get feedback without looking at a display.

In a further embodiment, the wristwatch-device has wristwatch main body and a wristband, the wristwatch main body having a volume of maximum 35000 cubic mm and including at least the user-interface, the connection-interface, a processing circuitry and a rechargeable battery in a single package.

In a further embodiment, the surveying system comprises a second remote controller embodied as handheld mobile device with touchscreen display having a minimum of 5000 sq mm display area, connection-interface, processing circuitry, and a rechargeable battery in a single package. The single package of the second remote controller having a volume of minimum 45000 cubic mm, the connection-interface being adapted for receiving real-time status and/or actual measurement data of the surveying device and for transmitting control command data for controlling the surveying device.

In a further embodiment, the sensor unit for generating motion/position-data comprises at least one of an inertial measurement unit (IMU) having one or more accelerometers and/or one or more gyroscopes, one or more cameras, an optical scanning component, in particular a Light Detection and Ranging (LiDAR) scanner, a magnetometer, an altimeter, a Global Navigation Satellite System (GNSS) unit, WI-FI-, Bluetooth-, Ultra-Wideband- and/or Cellular-positioning unit, and a visual inertial system (VIS) unit having a camera.

The scanning component capture spatial environments in an optical way while directly observing directions and distances. For this purpose Light Detection and Ranging (LiDAR) is suitable which is a remote sensing method that uses light in the form of a pulsed laser to measure distances of objects.

In a further embodiment, the surveying device is embodied as laser scanner or mobile mapping system, and in particular comprises a base unit, a support unit mounted with respect to the base unit and rotatable relative to the base unit around an azimuth axis.

In a further embodiment, the wristwatch-device comprises a user authentication unit having at least one of a pin code retrieval, a touchscreen-display-integrated or command-button-integrated fingerprint detector and camera-based face identification, and wherein access to the surveying device is unlocked by use of the user authentication unit of the wristwatch-device.

In a further embodiment, the surveying device is configured to generate, in real-time, a malfunction notice to be transmitted to the wristwatch-device in case a malfunction occurs during measurement of the surveying device, and the wristwatch-device is configured, upon receipt of the malfunction notice, to issue a signal to the user, in particular by activating a vibration signal via vibrate mode or issuing an acoustic signal via loudspeaker.

The invention also relates to a surveying system comprising a surveying device and a first remote controller, the first remote controller is embodied as glove adapted to be worn over the hand of a user. The glove comprises a connection-interface for receiving real-time status and/or actual measurement data of the surveying device and for transmitting control command data for controlling the surveying device. The glove further comprises a user-interface for interacting with the user.

The glove can be embodied as a smart glove, which is an input device for human-computer interaction worn like a glove. The smart glove can be equipped with various sensor technologies like motion sensors and scanners enabling the user to capture physical data such as bending of fingers. Often a motion tracker, such as a magnetic tracking device or inertial tracking device, is attached to capture the global position/rotation data of the glove. These movements are then interpreted by the software that accompanies the glove, so any one movement can mean any number of things. Gestures can then be categorized into useful information, such as to recognize sign language or other symbolic functions. To avoid incorrect usage and operational errors, the smart glove could alert the user immediately through sound or vibration.

In a further embodiment, the glove further comprises a sensor unit for generating data regarding actual motion, position and/or pose as motion/position-data that depends on actual motion, pose and/or position of the glove-wearing fingers and arm of the user and a processing circuitry configured to process the motion/position-data in a way to interpret the motion/position-data as a probable user behavior, and to generate the control command data based on the probable user behavior resulting from the interpretation.

In a further embodiment, the user-interface comprises a touchscreen display and in particular a command-button, loudspeaker, microphone and/or vibrate mode.

### BRIEF DESCRIPTION OF THE DRAWINGS

The invention is illustrated in more detail below, purely by way of example, with reference to working examples shown schematically in the drawing. Identical elements are labelled with the same reference numerals in the figures. The described embodiments are generally not shown true to scale and they are also not to be interpreted as limiting the invention.
Figure 1 shows an exemplary workflow for indoor surveying using a remote controller embodied as a wristwatch-device and a surveying device.
Figure 2 shows an exemplary workflow for indoor surveying using a wristwatch-device and a mobile surveying device.
Figure 3 shows an exemplary workflow of fleet management using a wristwatch-device and multiple surveying devices.
Figure 4 shows an exemplary workflow for outdoor surveying using a wristwatch-device and a mobile mapping device mounted on a car.
Figure 5 shows an exemplary embodiment of the wristwatch-device.
Figure 6 shows an exemplary workflow for indoor surveying using a remote controller embodied as a glove and a surveying device.
Figure 7 shows an exemplary embodiment of the glove.

### DETAILED DESCRIPTION OF THE DRAWINGS

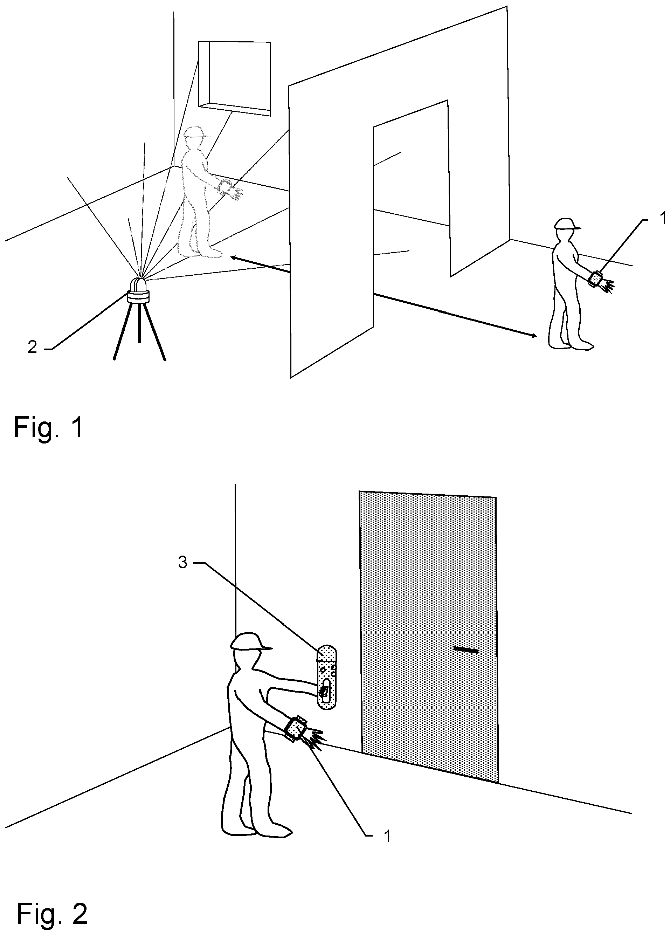

Figure 1 shows an exemplary workflow for indoor surveying using a remote controller embodied as a wristwatch-device 1 and a surveying device 2. In this case the surveying device 2 is embodied as a static laser scanner mounted on a tripod which is used to accurately measure and map a room. If the user remains in the room to start the measurement manually on the surveying device 2, the user remains in the scanning field and thus disturbs the measurement. The wristwatch-device 1 is adapted to be worn on the wrist of the user and comprises a connection-interface for receiving real-time status and/or actual measurement data of the surveying device 2 and for transmitting control command data for controlling the surveying device 2. This enables the user to leave the room and start the scanning procedure via the wristwatch-device 1. This ensures that the user is not scanned as well. Furthermore, the user is able to monitor the measurement with the wrist-watch device 1 and initiate corrective steps if necessary. The user also receives feedback regarding the current status of the measurement, i.e. when the measurement is complete and the room can be re-entered. The status of the measurement can be communicated via the user interface.

Figure 2 shows an exemplary workflow for indoor surveying using the wristwatch-device 1 and a mobile surveying device 3. By means of the mobile surveying device 3, which can be configured as a hand-held variant such as shown in this case or as a backpack variant, the user can move through a building and thus survey various rooms of the building. However, the difficulty of opening multiple doors or moving around barriers arises. If the user is forced to carry a conventional remote controller with one hand to control and monitor the measurement and to operate the remote controller with the other hand, both hands may be occupied and movement within the building may be restricted. The use of a remote controller embodied as a wristwatch-device 1 allows the user to have one hand or both hands free, which facilitates opening doors and thus moving within buildings. In addition, the wrist-watch device 1 allows the user to receive information about the current status of the measurement via acoustic signals or vibration and also to enter commands via voice control. In this way, the user can keep his eyes on the route while controlling the measurement and move safely in the building despite barriers. For example, in case the user is moving forward too fast such that the 3D point cloud collected by the device 3 will have a too small density, the wearable remote controller 3 can give an acoustic or haptic feedback so that the user knows that he should slow down.

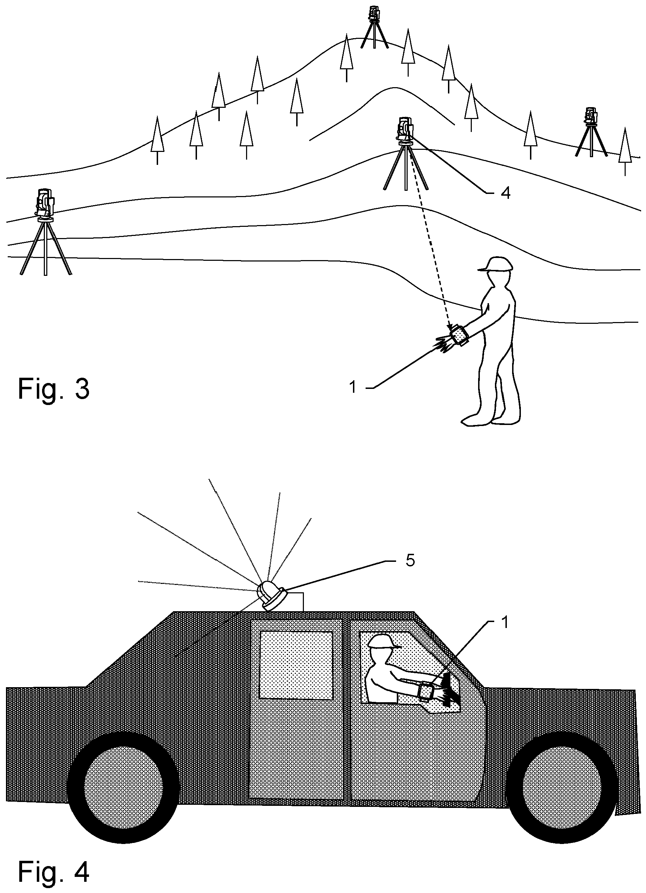

Figure 3 shows an exemplary workflow of fleet management using the wristwatch-device 1 and multiple surveying devices. The wrist-watch device 1 (personal smart device) can be associated to the surveying device 4 to assign data acquisition to the user. This enables the user to survey a defined part of the target area. The other surveying devices can be assigned to other remote controllers, wherein the entire fleet of surveying devices can be controlled simultaneously and the entire target area can be surveyed.

Figure 4 shows an exemplary workflow for outdoor surveying using a wristwatch-device 1 and a mobile mapping device 5 mounted on a car. In the shown example, the mobile mapping device 5 is a profiler that continuously sends out laser pulses while the transmission beam is rotated with high speed so that a scanning plane emerges that is oblique to the driving direction of the car. By means of the wrist-watch device 1, which has voice control and vibrate mode, the user can monitor and control the measurement of the mobile mapping device 5 without having to look at the remote controller. Furthermore, the user wears the wristwatch device 1 on his wrist, which leaves both hands free. Thus, a user can simultaneously concentrate on driving the car, receive feedback from the device 5 and measure the environment without a second person being necessary.

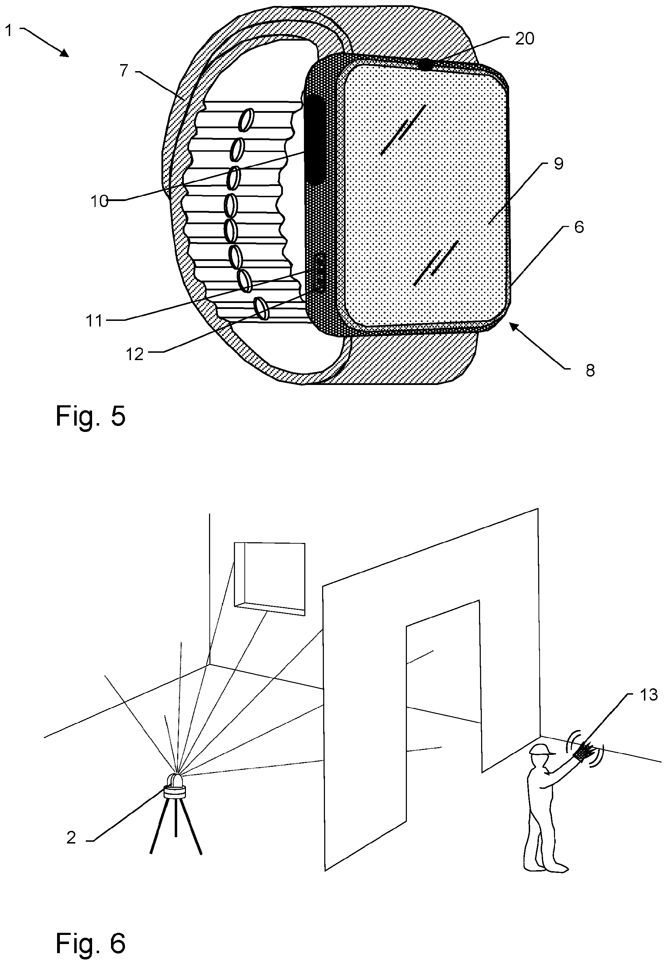

Figure 5 shows an exemplary embodiment of the wristwatch-device 1 having a wristwatch main body 6 and a wristband 7 including at least the user-interface 8, the connection-interface (not shown), a processing circuitry (not shown) and a rechargeable battery (not shown) in a single package. The user-interface 8 comprises a touchscreen display 9, a command-button 10, a loudspeaker 11, a microphone 12 and a camera 20. The user can enter commands to the surveying device 2 via the touchscreen display 9, via the camera 20, and/or by voice control, wherein the integrated microphone 12 records the voice command and converts it into the command that the surveying device 2 recognizes.

Figure 6 shows an exemplary workflow for indoor surveying using a remote controller embodied as a glove 13 and a surveying device 2. In this case the surveying device 2 is embodied as a static laser scanner mounted on a tripod which is used to accurately measure and map a room. If the user remains in the room to start the measurement manually on the surveying device 2, the user remains in the scanning field and thus disturbs the measurement. The glove 13 is adapted to be worn over the hand of the user and comprises a connection-interface for receiving a real-time status and/or actual measurement data of the surveying device 2 and for transmitting control command data for controlling the surveying device 2. This enables the user to leave the room and start the scanning procedure via the glove 13. This ensures that the user is not scanned as well. The glove 13 is configured to recognize the movement of the user's arm and fingers and assign them to specific commands to the surveying device 2. In this way, the user can make a specific gesture and thus start or stop the measurement. Optionally, the user can monitor the measurement with the glove 13 if it has an optional display, and initiate corrective steps if necessary. The user also receives feedback regarding the current status of the measurement, e.g. when the measurement is complete and the room can be re-entered. The status of the measurement can be communicated via the user interface 8.

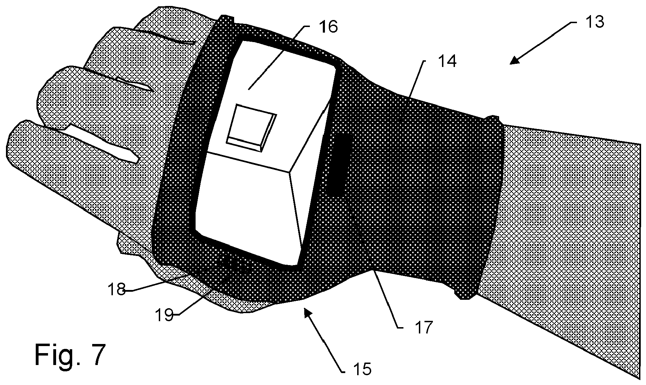

Figure 7 shows an exemplary embodiment of the glove 13, having a main body 14 including at least the user-interface 15, the connection-interface (not shown), a processing circuitry (not shown) and a rechargeable battery (not shown) in a single package. The user-interface 15 comprises a touchscreen display 16, a command-button 17, a loudspeaker 18 and a microphone 19. The user can enter commands to the surveying device 2 via the touchscreen display 16 or by voice control, where the integrated microphone 19 records the voice command and converts it into the command that the surveying device 2 recognizes. As the user can be informed about the status of the measurement via vibration or acoustic signals and can give commands to the measuring system via voice control, the display 16 as well as the command button 17 can be considered as optional. The touchscreen function of the display 16 is also optional, since commands can be entered via the channels already mentioned. It is also conceivable for the display 16 to be designed purely as a viewing display.

Although the invention is illustrated above, partly with reference to some preferred embodiments, it must be understood that numerous modifications and combinations of different features of the embodiments can be made. All of these modifications lie within the scope of the appended claims.

## Claims

1. Surveying system comprising a surveying device (2) and a first remote controller,
**characterized in that**
the first remote controller is embodied as wristwatch-device (1) adapted to be worn on a wrist of a user, the wristwatch-device comprising a connection-interface
for receiving real-time status and/or actual measurement data of the surveying device (2) and
for transmitting control command data for controlling the surveying device (2),
the wristwatch-device (1) further comprising a user-interface for interacting with the user.

2. Surveying system according to claim 1, wherein the wristwatch-device (1) further comprises
• a sensor unit for generating data regarding actual motion, position and/or pose as motion/position-data that depends on actual motion, pose and/or position of the wristwatch-device-wearing wrist of the user,
• at least one microphone (12) and at least one loudspeaker (11) configured to receive and give acoustic instructions by means of voice control.

3. Surveying system according to claim 2, wherein the wristwatch-device (1) further comprises
a processing circuitry configured to process the motion/position-data in a way to interpret the motion/position-data as a probable user behavior, and to generate the control command data based on the probable user behavior resulting from the interpretation.

4. Surveying system according to claim 3, wherein - as motion/position-data - a distance of a user to the surveying device (2) is continuously gathered over time, and - in processing the distance d - a consecutively increasing distance over time reaching a defined threshold distance is interpreted as intention of a user to pause or stop measurement task, and - as control command data - a command to temporarily block usage of the surveying device (2) is generated functioning as anti-theft protection.

5. Surveying system according to claim 3, wherein - as motion/position-data - a pose and path of the wristwatch-device-wearing wrist of the user is continuously gathered over time, and - in processing the position and pose - a pose and path indicative of a fall of the user is interpreted as fall, and - as control command data - a control command to stop measurement of the surveying device (2) and/or to initiate a security backup of the actual measurement data of the surveying device (2).

6. Surveying system according to any of the preceding claims, wherein the user-interface comprises a touchscreen display (9) having a maximum of 2500 sq mm display area and in particular a command-button (10), loudspeaker (11), microphone (12) and/or vibrate mode.

7. Surveying system according to any of the preceding claims, wherein the wristwatch-device (1) has wristwatch main body (6) and a wristband (7), the wristwatch main body (6) having a volume of maximum 35000 cubic mm and including at least the user-interface (8), the connection-interface, a processing circuitry and a rechargeable battery in a single package.

8. Surveying system according to any of the preceding claims, the surveying system comprising
a second remote controller embodied as handheld mobile device with touchscreen display having a minimum of 5000 sq mm display area, connection-interface, processing circuitry, and a rechargeable battery in a single package, the single package of the second remote controller having a volume of minimum 45000 cubic mm, the connection-interface being adapted
for receiving real-time status and/or actual measurement data of the surveying device (2) and
for transmitting control command data for controlling the surveying device (2).

9. Surveying system according to any of the preceding claims, wherein the sensor unit for generating motion/position-data comprises at least one of
an inertial measurement unit (IMU) having one or more accelerometers and/or one or more gyroscopes,
one or more cameras,
an optical scanning component, in particular a Light Detection and Ranging (LiDAR) scanner,
a magnetometer,
an altimeter,
a Global Navigation Satellite System (GNSS) unit,
WI-FI-, Bluetooth-, Ultra-Wideband- and/or Cellular-positioning unit, and
a visual inertial system (VIS) unit having a camera.

10. Surveying system according to any of the preceding claims, wherein the surveying device (2) is embodied as laser scanner or mobile mapping system, and in particular comprises
a base unit,
a support unit mounted with respect to the base unit and rotatable relative to the base unit around an azimuth axis.

11. Surveying system according to any of the preceding claims, wherein the wristwatch-device (1) comprises a user authentication unit having at least one of a pin code retrieval, a touchscreen-display-integrated or command-button-integrated fingerprint detector and camera-based face identification, and wherein access to the surveying device (2) is unlocked by use of the user authentication unit of the wristwatch-device (1).

12. Surveying system according to any of the preceding claims, wherein the surveying device (2) is configured to generate - in real-time - a malfunction notice to be transmitted to the wristwatch-device (1) in case a malfunction occurs during measurement of the surveying device (2), and the wristwatch-device (1) is configured - upon receipt of the malfunction notice - to issue a signal to the user, in particular by activating a vibration signal via vibrate mode or issuing an acoustic signal via loudspeaker (11).

13. Surveying system comprising a surveying device (2) and a first remote controller,
**characterized in that**
the first remote controller is embodied as a glove (13) adapted to be worn over the hand of a user, the glove (13) comprising a connection-interface
for receiving real-time status and/or actual measurement data of the surveying device (2) and
for transmitting control command data for controlling the surveying device (2),
the glove (13) further comprising a user-interface (15) for interacting with the user.

14. Surveying system according to claim 13, wherein the glove (13) further comprises
a sensor unit for generating data regarding actual motion, position and/or pose as motion/position-data that depends on actual motion, pose and/or position of the glove-wearing fingers and arm of the user,
a processing circuitry configured to process the motion/position-data in a way to interpret the motion/position-data as a probable user behavior, and to generate the control command data based on the probable user behavior resulting from the interpretation.

15. Surveying system according to claims 13 and 14, wherein the user-interface comprises a touchscreen display (16) and in particular a command-button (17), loudspeaker (18), microphone (19) and/or vibrate mode.
